Europäisches Patentamt

European Patent Office

Office européen des brevets

(11) Veröffentlichungsnummer : **0 118 695**
**B1**

(19)

(12) **EUROPÄISCHE PATENTSCHRIFT**

(45) Veröffentlichungstag der Patentschrift :
20.08.86

(21) Anmeldenummer : 84100751.1

(22) Anmeldetag : 21.01.84

(51) Int. Cl.⁴ : **C 08 L 25/16, C 08 L 25/12,**
**C 08 L 51/04, C 08 L 51/00**

(54) **Thermoplastische Formmassen.**

(30) Priorität : 05.02.83 DE 3303864

(43) Veröffentlichungstag der Anmeldung :
19.09.84 Patentblatt 84/38

(45) Bekanntmachung des Hinweises auf die Patenterteilung : 20.08.86 Patentblatt 86/34

(84) Benannte Vertragsstaaten :
BE DE FR GB IT NL

(56) Entgegenhaltungen :
EP-A- 0 043 512

(73) Patentinhaber : BAYER AG
Konzernverwaltung RP Patentabteilung
D-5090 Leverkusen 1 Bayerwerk (DE)

(72) Erfinder : Koch, Otto, Dr.
Morgengraben 12
D-5000 Köln 80 (DE)
Erfinder : Liebig, Lothar, Dr.
Am Katterbach 26
D-5060 Bergisch-Gladbach 2 (DE)
Erfinder : Doering, Joachim, Dr.
Silesiusstrasse 78
D-5000 Köln 80 (DE)

**Beschreibung**

Gegenstand der Erfindung sind thermoplastische Formmassen aus

I. 5 bis 80 Gew.-Teilen eines Pfropfpolymerisats von 70-30 Gew.-% eines Gemisches aus
(A) einem Vinylaromat und/oder $C_1$-$C_4$-Methacrylsäurealkylester und
(B) Acrylnitril oder (Meth)Acrylnitril auf 30-70 Gew.-% eines Kautschuks mit einer Glasübergangstemperatur von unter — 10 °C und

II. 20 bis 95 Gew.-Teilen eines Terpolymerisats aus
(A) α-Methylstyrol
(B) Acrylnitril und
(C) Styrol,

hergestellt durch Lösungs- oder Massepolymerisation bei unvollständigen Umsätzen von 25-60 Gew.-% und bei Temperaturen von 80-150 °C in Gegenwart eines in Radikale zerfallenden Initiators aus
(A) 30-40 Gew.-% α-Methylstyrol
(B) 26-35 Gew.-% Acrylnitril
(C) 44-26 Gew.-% Styrol

Durch kontinuierliche homogene Polymerisation in einem kontinuierlich beschickten Tankreaktor unter stationären und ideal durchmischten Bedingungen, bei 120 bis 140 °C, mittleren Verweilzeiten von mehr als 60 Minuten, Monomerumsätzen von 40 bis 55 Gew.-%, in Gegenwart von 0,5 bis 0,005 Mol-%, bezogen auf Gesamtmonomer, eines oder mehrerer in Radikale zerfallender Polymerisationsinitiatoren mit einer Halbwertszeit von 5 sec. bis 9 min. bei 130 °C und anschließender Entfernung der Restmonomeren bis auf einen Gehalt unter 0,1 Gew.-%, bezogen auf das Terpolymerisat.

Thermoplastische Formmassen aus Pfropfpolymerisaten der angegebenen Art und Copolymerisaten auf Styrol- oder α-Methylstyrol-Basis sind bekannt. Derartige 2-Phasenkunststoffe werden meist als « ABS »-Pfropfpolymerisate bezeichnet.

Um zu vollständig befriedigenden Ergebnissen zu gelangen, ist es erforderlich, bei der Herstellung des Terpolymerisatharzes di Kombination der oben angegebenen Bedingungen einzuhalten. Insbesondere werden geeignete Terpolymerisate erhalten, wenn die folgenden Herstellungsbedingungen gleichzeitig erfüllt sind :

1) Kontinuierliche homogene Polymerisation in einem kontinuierlich beschickten Tankreaktor unter stationären und ideal durchmischten Bedingungen.

2) Ein Monomereinsatz von
(A) 30 bis 40 Gew.-% α-Methylstyrol
(B) 26 bis 35 Gew.-% Acrylnitril
(C) 44 bis 26 Gew.-% Styrol

3) Polymerisation bei 120-140 °C

4) Mittlere Verweilzeiten von länger als 60 Min., vorzugsweise 90 bis 240 Min.

5) Monomerumsätze von 40 bis 55 Gew.-%

6) Unter Mitverwendung von 0,5 bis 0,005 Mol-%, bezogen auf Mole (A) + (B) + (C), eines oder eines Gemisches von in Radikale zerfallenden Initiatoren mit einer Halbwertszerfallzeit von 5 sec. bis 9 min. bei 130 °C.

Die erhaltenen Terpolymerisate haben dann Intrinsic-Viskositäten von 0,45 bis 0,85 dl/g, gemessen bei 25 °C in Dimethylformamid.

Bei einer kontinuierlichen, homogenen Polymerisation werden in einen Reaktor kontinuierlich die Ausgangskomponenten mit konstanter Fördergeschwindigkeit eingetragen, in demselben Maß wird Reaktionsprodukt abgezogen, so daß sich in dem Reaktor zeitlich ein konstanter Füllgrad einstellt. « Homogen » bedeutet, daß es sich hier um ein einphasiges System handelt. Das gebildete Polymerisat ist in seiner Reaktionsmischung homogen löslich. Auch die Ausgangskomponenten sind in dem Reaktionsgemisch homogen löslich. Bei der homogenen Massepolymerisation wirken die nicht umgesetzten Monomeren als Lösungsmittel für das gebildete Polymerisat. Die Massepolymerisation zeichnet sich durch ihre hohe Raum-Zeit-Ausbeute gegenüber der Emulsions- und Perlpolymerisation aus. Oft empfiehlt es sich, bei der Massepolymerisation eine geringe Menge an Lösungsmittel zuzusetzen, z. B. 5 bis 30 Gew.-% Methylethylketon, Ethylbenzol, usw.

Diese die Viskosität herabsetzenden Zusätze werden im Anschluß an die Polymerisation zusammen mit den nicht umgesetzten Monomeren entfernt. Der Anteil von α-Methylstyrol in der Monomerausgangsmischung von 30 bis 40 Gew.-% ist kritisch. Bei einem Anteil von über 40 Gew.-% α-Methylstyrol fällt mit steigendem Anteil die Momasse des gebildeten Polymerisates rapide ab, zu erkennen in einem Abfall der Intrinsicviskosität unter 0,45 dl/g, gemessen bei 25 °C in Dimethylformamid (DMF). Dies macht sich in verschlechterter mechanischer Festigkeit der erhaltenen « ABS »-Formmassen bemerkbar. Harze, die aus einer Monomermischung mit weniger als 30 Gew.-% α-Methylstyrol und dementsprechend mehr Styrol hergestellt worden sind, liefern zwar « ABS »-Formmassen mit guter mechanischer Festigkeit, jedoch fällt ihre Wärmeformbeständigkeit auf unter 104 °C, gemassen nach Vicat, ab.

Die Kombination einer Polymerisationstemperatur von 120 bis 140 °C, einer Verweilzeit größer als 60 Min. und dem stationären Umsatz von 40-55 Gew.-% ist zur Erzielung besonders vorteilhafter, technisch interessanter Terpolymerisate kritisch. Eine Polymerisationstemperatur über 140 °C, ein stationärer Umsatz von über 55 Gew.-% und eine kürzere Verweilzeit als 60 Min. lassen die Molmassen der Harze und damit die mechanische Festigkeit des « ABS » so weit abfallen, daß die besonders vorteilhaften, technisch interessanten Terpolymerisate, die mit der oben genannten Kombination von Maßnahmen herstellbar sind, nicht mehr erhalten werden können. Eine Verlängerung der Polymerisationszeit über 240 Min. hinaus, eine Erniedrigung des Umsatzes unter 40 Gew.-% und eine Absenkung der Polymerisationstemperatur unter 125 °C ist nicht so kritisch in bezug auf die Eigenschaften des Polymerisates, jedoch wird das Verfahren dadurch unwirtschaftlicher. Bei niedrigeren Polymerisationstemperaturen steigt der Bedarf an Initiator zur Erzielung eines konstanten Umsatzes enorm an. Die Halbwerts-Zerfallzeit des Initiators bei Polymerisationstemperatur — zur Charakterisierung wird die Halbwertszeit bei 130 °C verwendet — ist ebenfalls kritisch. Mit rascher zerfallenden Initiatoren, mit Halbwertszeiten von unter 5 Sek. bei 130 °C läßt sich zwar die Polymerisation in Gang halten, der Bedarf steigt jedoch und die Molmassen nehmen ab. Das Verfahren wird unwirtschaftlicher und die Produkte mangelhaft. Bei Verwendung von langsamer zerfallenden Initiatoren mit einer Halbwertszerfallszeit von länger als 9 Min. bei 130 °C besteht die Gefahr, daß sich nicht zerfallende Initiatoranteile im Reaktionsgut ansammeln, die bei kleinen Störungen ein Durchgehen der Polymerisation bewirken oder bei der Aufarbeitung eine unerwünschte Nachpolymerisation auslösen können.

Als Initiatoren kommen z. B. in Frage :

|                          | Halbwertszeit bei 130 °C |
|--------------------------|--------------------------|
| tert.-Butylperoctoat     | 34,7 sec.                |
| Benzoylperoxid           | 79,7 sec.                |
| Dilauroylperoxid         | 13,3 sec.                |
| tert.-Butylperpivalat    | 13,6 sec.                |
| Azo-bis(isobutyronitril) | 11,2 sec.                |

Die homogene Polymerisation kann auch in Gegenwart von die Viskosität herabsetzenden Zusätzen wie Methylethylketon, Ethylbenzol, Toluol, tert.-Butanol in Mengen von 5 bis 30 Gew.-%, bezogen auf die Summe von (A), (B), und (C), durchgeführt werden. Dieser Zusatz, der bei Massepolymerisationen üblich ist, darf nur so weit mitverwendet werden, wie er die Polymerisation nicht allzusehr verlangsamt. Die erfindungsgemäßen Harze zeichnen sich durch eine hohe chemische und molekulare Einheitlichkeit aus. Die Uneinheitlichkeit des molaren Gewichtes beträgt U = 0,8 bis 1,4, berechnet nach

$$U = (\overline{M}w/Mn) - 1$$

Die Wärmeformbeständigkeiten der reinen Harze liegen im Bereich von 110 bis 114 °C, gemessen nach Vicat B.

Diese Terpolymerisate dienen als Matrixharze zur Herstellung von wärmeformbeständigen « ABS-Formmassen ». Man mischt meist die Harzkomponenten mit einer Pfropfkautschukkomponente in der Schmelze in Knetern, Innenmischern, auf Walzen oder Extrudern. Es ist aber auch möglich, eine Polymerzubereitung durch stufenweise Polymerisation herzustellen, z. B. zunächst durch Herstellung des Kautschukphase, auf die dann der Pfropfanteil durch Polymerisation aufgebracht wird. Im Anschluß daran wird die Harzphase polymerisiert.

Die zu verwendenden Pfropfkautschuk-Komponenten sind bekannt. Sie können erhalten werden durch Polymerisation von Styrol und gegebenenfalls α-Methylstyrol, mit Acrylnitril in Gegenwart einer Kautschukgrundlage. Die Grundlage bezeichnet man auch als Pfropfsubstrat. Man beobachtet, daß bei der Pfropfung auf dem Substrat nicht die gesamten Monomeren aufgepfropft werden, sondern daß ein Teil der Monomeren zu freiem Harz polymerisiert. Diese Pfropfpolymerisate können in bekannter Weise durch radikalische Polymerisation der Monomeren in Gegenwart des Kautschuks in Substanz, Emulsion, Suspension, Lösung, sowie durch kombinierte Verfahren wie Masse/Suspensionspolymerisation oder Lösungs/Fällungspolymerisation hergestellt werden.

Als Pfropfgrundlage werden Natur- und Synthesekautschuke in löslicher oder anvernetzter Form verwendet. Geeignete Synthesekautschuke sind Homo- und Copolymerisate von gegebenenfalls Halogen

**0 118 695**

substituierten, konjugierten Dienen mit 4 bis 8 Kohlenstoffatomen wie Butadien, Isopren, Chloropren und deren Copolymerisate mit Styrol und/oder Acrylnitril. Die Copolymerisate können statistisch oder blockartig aufgebaut sein. Bei blockartigen Produkten kann es sich um Zweiblockpolymere der Form AB oder auch um Dreiblockpolymere der Form ABA, sowie um sternförmige Blockpolymere etwa der Formel $(ABA)_xY$ handeln, wobei A z. B. für Styrol, B für Butadien und Y für ein mehrfunktionelles Kupplungsreagenz, wie z. B. $SiCl_4$, $S_2Cl_2$, Divinylbenzol, epoxidierte Fettsäuren u. a. steht ; x liegt in der Größenordnung von 2 bis 5. Bevorzugt werden Polybutadiene mit einem hohen cis-Anteil der Doppelbindungen in der Polymerkette von über 95 %, wobei der Anteil an 1,2-Vinyl-Doppelbindungen bis 15 %, bezogen auf alle Doppelbindungen, betragen kann, sowie Styrol-Butadien-Blockpolymere mit einem Styrolanteil von 5 bis 45 Gew.-%. Eine weitere Klasse der Synthesekautschuke besteht aus Ethylen-Propylen-Co- und Terpolymeren. Sie enthalten 70 bis 30 Gew.-Teile Ethylen auf 30 bis 70 Gew.-Teile Propylen. Vorteilhaft sind Terpolymere mit 4 bis 15 Gew.-% z. B. 5-Ethylidennorbornen, Dicyclopentadien, Hexadien-(1,4), 2,2,1-Bicycloheptadien mit etwa 1 bis 20 C=C-Doppelbindungen pro 1 000 Atome. Pfropfkomponente auf Basis dieser sogenannten EPDM- oder APTK-Kautschuke zeichnen sich durch besonders gute Witterungsbeständigkeit aus. Zu den witterungsbeständigen Pfropfkomponenten gehören ebenfalls die Klasse der Polyethylen-co-vinylacetat (EVA) und der Acrylat-Elastomere. Die EVA-Elastomere enthalten 30 bis 85 % einpolymerisiertes Vinylacetat, können zur besseren Bepfropfbarkeit mit ungesättigten Carbonsäuren, z. B. Acryl- oder Methacrylsäure seitenständig verestert sein. Die EVA-Copolymere können auch teilverseift sein mit OH-Zahlen von 1 bis etwa 100 mg KOH/g Substanz. Bei den Acrylatkautschuken handelt es sich meist um Copolymerisate von $C_2$-$C_8$-Alkylester der Acrylsäure wie z. B. Ethyl-, n- oder Iso-Propyl-, n-Butyl-, iso-Butyl-, tert.-Butyl-, 2-Ethylhexyl-acrylat. Weitere Comonomere sind u. a. Acrylnitril, Methacrylate mit 1 bis 14 C-Atomen im Alkohol-Teil, Butadien, Vinylalkylether mit 1 bis 18 C-Atomen im Alkyl-Teil.

Die aus den erfindungsgemäßen Harzen hergestellten « ABS-Formmassen » besitzen eine Wärmeformbeständigkeit von mindestens 104 °C, vorzugsweise von 108 bis 116 °C, nach Vicat B. Verglichen mit ABS-Formmassen auf Basis von durch Emulsionspolymerisation gewonnenen α-Methylstyrol/Styrol/Acrylnitril-Harzen bei gleichem Styrol- und α-Methylstyrolanteil ist ihre praktische Wärmeformbeständigkeit um 2 bis 6 °C höher. Auch besitzen die mit den erfindungsgemäßen Harzen hergestellten « ABS-Formmassen » einen helleren Roh-Farbton, neigen weniger zur Verfärbung bei Temperaturbelastung während der Verarbeitung und zeigen eine bessere Fließfähigkeit bei der Verarbeitung. Formkörper zeichnen sich durch eine hervorragende Oberflächenqualität und geringe Spannungszustände aus.

Den « ABS » Formmassen können übliche Stabilisatoren, Lichtschutz-, Alterungsschutzmittel, Verlaufs- und Verarbeitungshilfsmittel, Füllstoffe, mineralische sowie organische Faser- und Verstärkerfüllstoffe wie Glasfaser, Kohlenstoffaser, Metallwiskers, Polyester-, Polyamid-, Polyaramid-Faser etc., Pigmente etc. zugesetzt sein. Die erfindungsgemäßen Formmassen sind insbesondere dort von Vorteil, wo es auf gute Wetterbeständigkeit, hohe Wärmeformbeständigkeit, hohe Zähigkeit und leichte Verarbeitbarkeit ankommt. So können sie beispielsweise mit Vorteil zur Herstellung von Rohrleitungen, von hochwertigen Dichtungen, von Geschirr, von heißdampfsterilisierbaren Geräten, von Waschmaschinenteilen, von Batteriekästen, von Trockenbatteriegehäusen, von Gehäusen und anderen isolierenden Teilen in elektrisch betriebenen Maschinen, von Elektroisolierfolien, von verseifungsstabilen Behälterauskleidungen, chemisch und thermisch widerstandsfähigen Filtertüchern und vielen anderen Dingen verwendet werden. Bevorzugte Anwendungsgebiete sind der Bau von Fahrzeugteilen, Automobil-, Kraftrad-, Flugzeug-, Eisenbahnbau, die Herstellung von kompliziert geformten Spritzgußteilen, von denen eine hohe Wärmeformbeständigkeit verlangt wird, wie z. B. Kühlergrille, Kotflügeleinlagen, Innenverkleidungen, Armaturentafeln, Haltegriffe, Autodächer, Abdeckungen, Gehäuse von Haushaltsgeräten und von Büromaschinen.

In den folgenden Beispielen sind, wenn nicht anders angegeben, Teile Gewichtsteile und Prozente Gewichtsprozente.

Herstellung des Terpolymerisats

In einem ummantelten Gefäß, das mit Innenthermometer, Rührer, Ein- und Auslaß versehen ist, werden 1 000 Teile eines Gemisches aus Styrol, α-Methylstyrol und Acrylnitril mit einer Zusammensetzung entsprechend Tabelle 1 vorgelegt und auf 130 °C erwärmt. Dann wird ein Monomerstrom derselben Zusammensetzung so zudosiert und gleichzeitig dieselbe Menge an Polymerlösung dem Gefäß entnommen, daß sich die gewünschte Verweilzeit im Gefäß ergibt und der Füllstand gehalten wird. Dem Monomereintrittsstrom wird kontinuierlich Azobisisobutyronitril zugefügt (Menge entsprechend Tabelle 1). Nach ca. 6 h hat sich ein konstanter Umsatz von ca. 45 % eingestellt. Die Polymerlösung wird mit 0,1 Gew.-% 2,6-Di-t-butyl-p-kresol versetzt und anschließend auf einem Ausdampfextruder von Monomeren und flüchtigen Bestandteilen befreit.

Herstellung der Formmassen

Zur Herstellung der erfindungsgemäßen Formmassen werden die Harzkomponenten und die

4

Pfropfmischpolymerisate bei Temperaturen zwischen 170° und 230 °C auf den üblichen Verarbeitungsmaschinen wie Extrudern, Walzen und Knetern vermischt.

Pfropfmischpolymerisate

$B_1$ Pfropfkautschuk, hergestellt durch Pfropfung von 50 Teilen Styrol und Acrylnitril im Verhältnis
72/78 auf 50 Teile eines in Emulsion polymerisierten Polybutadiens, wobei der mittlere Teilchendurchmesser der Pfropfgrundlage zwischen 0,1 und 0,4 μm liegt.

$B_2$ Pfropfkautschuk, hergestellt durch Pfropfung von 50 Teilen Styrol und Acrylnitril im Verhältnis
72/28 auf 50 Teile eines in Emulsion polymerisierten vernetzten Butylacrylatkautschukes, wobei der
mittlere Teilchendurchmesser der Pfropfgrundlage bei 0,4 μm liegt.

$B_3$ Pfropfkautschuk hergestellt durch Pfropfung von 48 Teilen EPDM-Kautschuk auf Basis von
Dicyclopentadien (Iodzahl 11, Mooney 70) gelöst in 300 Teilen Benzol mit 37.5 Teilen Styrol und 14,5
Teilen Acrylnitril bei 120 °C unter Verwendung von 0,9 Teilen tert.-Butylperoxid.

Tabelle 1

Harzkomponente/Herstellbedingung

| | Zusammensetzung der Einsatz-monomeren in Gew.-% | | | Temp. | Verweil-zeit | Umsatz | Initiator-menge | |
| | Styrol | α-Methylstyrol | Acrylnitril | /°C/ | /min/ | Gew.-% | Mol-% |
|---|---|---|---|---|---|---|---|
| A1 | 30 | 40 | 30 | 130 | 120 | 40 | 0,021 |
| A2 | 35 | 30 | 35 | 130 | 120 | 42 | 0,010 |
| A3 | 35 | 30 | 35 | 135 | 75 | 45 | 0,038 |
| A4 | 35 | 35 | 30 | 130 | 120 | 50 | 0,014 |
| Vergleichsharze: | | | | | | | |
| V1 | 30 | 40 | 30 | 130 | 45 | 45 | 0,080 |
| V2 | 25 | 45 | 30 | 130 | 80 | 50 | 0,044 |
| V3 | 30 | 40 | 30 | 140 | 80 | 65 | 0,046 |

Tabelle 2

| | Harzkomponente | | | |
| | $[\eta]_{DMF}^{25}$ | Hc | MFI | Vic. B |
| | /dl/g/ | /MPa/ | /g/10 min/ | /°C/ |
|---|---|---|---|---|
| A1 | 0,59 | 157 | 31 | 114 |
| A2 | 0,76 | 161 | 11 | 113 |
| A3 | 0,67 | 144 | 21 | 108 |
| A4 | 0,63 | 165 | 25 | 115 |
| V1 | 0,44 | 143 | 94 | 110 |
| V2 | 0,45 | 151 | 57 | 113 |
| V3 | 0,52 | 138 | 49 | 110 |

Tabelle 3

Beispiele

| | Zusammensetzung | | | $a_n [kJ/m^2]$ | | $a_k [kJ/m^2]$ | | Vic.B | MFI | Hc | HDT |
|---|---|---|---|---|---|---|---|---|---|---|---|
| | | | | 20° | -40° | 20° | -40° | $[°C]$ | $[g/10min]$ | $[MPa]$ | $[°C]$ |
| 1 | 77,5 Tl. A1 | 22,5 Tl. B1 | | $(51)_2$ | 57 | 10,0 | 4,0 | 107 | 16,7 | 120 | 91 |
| 2 | 77,5 Tl. A2 | 22,5 Tl. B1 | | $(89)_5$ | 63 | 11,1 | 4,4 | 109 | 10,0 | 122 | 92 |
| 3 | 77,5 Tl. A3 | 22,5 Tl. B1 | | $(115)_2$ | 70 | 12,0 | 4,6 | 108 | 10,9 | 123 | – |
| 4 | 77,5 Tl. A4 | 22,5 Tl. B1 | | 117 | 60 | 10,8 | 3,7 | 108 | 9,0 | 120 | 91 |
| 5 | 65 Tl. A3 | 35 Tl. B2 | | $(119)_5$ | 82 | 9,1 | 4,5 | 104 | – | – | – |
| 6 | 70 Tl. A3 | 30 Tl. B3 | | 87 | 60 | 10,3. | 2,3 | 104 | 11,1 | 119 | – |
| 7 | 77,5 Tl. V1 | 22,5 Tl. B1 | | 49 | 47 | 5,9 | 1,9 | 107 | 52 | 130 | – |
| 8 | 77,5 Tl. V2 | 22,5 Tl. B1 | | 81 | 56 | 7,8 | 2,0 | 108 | 32 | 121 | – |
| 9 | 77,5 Tl. V3 | 22,5 Tl. B1 | | 62 | 42 | 7,5 | 2,0 | 107 | 35 | 119 | – |

0 118 695

Tabelle 3 (Fortsetzung)

a Index n Schlagzähigkeit nach DIN 53453. Es wurden jeweils 10 Normkleinstäbe geprüft. Wenn nicht alle Stäbe bei einer gegebenen Schlagbeanspruchung gebrochen sind, ist die Schlagbeanspruchung in Klammern gesetzt und die Anzahl der gebrochenen Stäbe dahinter angegeben.

a Index k Kerbschlagzähigkeit nach DIN 53453

Vic.B Wärmeformbeständigkeit nach Vicat B in °C nach DIN 53460

MFI Melt Flow Index nach DIN 53735 bei 240 °C

HDT Heat Distortion Temperatur nach DIN 53461 mit 1,82 MPa Last

Hc Härteprüfung durch Eindruckversuch (Kugeldruckhärte), gemessen nach DIN 53556.

Die Vergleichsversuche mit den Harzen V1-V3, Versuche 7-9 zeigen, daß außerhalb des Anspruchsbereichs hergestellte Harze in Abmischung mit Pfropfprodukt mangelnde Kerbschlagzähigkeit besitzen.

**Patentanspruch**

Thermoplastische Formmasse aus

I. 5 bis 80 Gew.-Teilen eines Pfropfpolymerisats von 70 bis 30 Gew.-% eines Gemisches aus

(A) einem Vinylaromat und/oder $C_1$-$C_4$-Methacrylsäurealkylester und

(B) Acrylnitril oder (Meth)Acrylnitril auf 30-70 Gew.-% eines Kautschuks mit einer Glasübergangstemperatur von unter — 10 °C und

II. 20-95 Gewichts-Teilen eines Terpolymerisats aus

(A) α-Methylstyrol

(B) Acrylnitril

(C) Styrol,

dadurch gekennzeichnet, daß das Terpolymerisat II durch Lösungs- oder Massepolymerisation eines Gemisches aus

(A) 30-40 Gew.-% α-Methylstyrol

(B) 26-35 Gew.-% Acrylnitril

(C) 44-26 Gew.-% Styrol

durch kontinuierliche homogene Polymerisation in einem kontinuierlich beschickten Tankreaktor unter stationären und ideal durchmischten Bedingungen, bei 120-140 °C, mittleren Verweilzeiten von mehr als 60 Minuten, Monomerumsätzen von 40-55 Gew.-%, in Gegenwart von 0,5-0,005 Mol.-%, bezogen auf das Gesamtmonomer, eines oder mehrerer, in Radikale zerfallender Polymerisationsinitiatoren mit einer Halbwertszeit von 5 sec. bis 9 Minuten bei 130 °C hergestellt wird und anschließender Entfernung der Restmonomeren bis auf einen Gehalt unter 0,1 Gew.-%, bezogen auf das Terpolymerisat II.

**Claim**

Thermoplastic moulding composition of

I. 5 to 80 parts by weight of a graft polymer of 70 to 30 % by weight of a mixture of

(A) a vinyl aromatic and/or $C_1$-$C_4$ methacrylic acid alkyl ester and

(B) acrylonitrile or (meth)acrylonitrile on 30-70 % by weight of a rubber having a glass transition temperature of below — 10 °C and

II. 20-95 parts by weight of a terpolymer of

(A) α-methylstyrene,

(B) acrylonitrile and

(C) styrene,

characterised in that the terpolymer II is prepared by solution or bulk polymerisation of a mixture of

(A) 30-40 % by weight of α-methylstyrene,

(B) 26-35 % by weight of acrylonitrile and

(C) 44-26 % by weight of styrene,

by continuous homogeneous polymerisation in a continuously charged tank reaktor under stationary and ideally mixed conditions, at 120-140 °C, average dwell times of more than 60 minutes, monomer conversions of 40-55 % by weight, and in the presence of 0.5-0.005 mol%, based on the total monomer, of one or more polymerisation initiators which decompose into radicals and have a half life of 5 sec. to 9 minutes at 130 °C, and subsequent removal of the residual monomers down to a content of below 0.1 % by weight, based on the terpolymer II.

**Revendication**

Masse de moulage thermoplastique composée :

I. de 5 à 80 parties en poids d'un polymère greffé de 70 à 30 % en poids d'un mélange constitué par

(A) un hydrocarbure aromatique vinylique et/ou un ester alcoylé en $C_1$-$C_4$ d'acide méthacrylique et par

(B) de l'acrylonitrile ou (méth)acrylonitrile, sur 30 à 70 % en poids d'un caoutchouc ayant une température de transition vitreuse inférieure à — 10 °C, et

II. de 20 à 95 parties en poids d'un terpolymère se composant

(A) d'α-méthylstyrène

(B) d'acrylonitrile

(C) de styrène,

caractérisé en ce que le terpolymère II a été préparé par polymérisation en solution ou en masse d'un mélange

(A) de 30 à 40 % en poids d'α-méthylstyrène

(B) de 26 à 35 % en poids d'acrylonitrile

(C) de 44 à 26 % en poids de styrène

par polymérisation homogène continue dans un réacteur à réservoir alimenté continuellement dans des conditions stationnaires et de mélange intime idéal à 120-140 °C, avec des temps de séjour moyens supérieurs à 60 minutes, avec des conversions des monomères de 40 à 55 % en poids, en présence de 0,5 à 0,005 mole%, par rapport au monomère total, d'un ou plusieurs initiateurs de polymérisation se décomposant en radicaux et ayant un temps de demi-vie de 5 secondes à 9 minutes à 130 °C, avec par la suite élimination des monomères résiduels jusqu'à une teneur inférieure à 0,1 % en poids par rapport au terpolymère II.